# EUROPEAN PATENT APPLICATION

(11) **EP 2 434 444 A1**
(43) Date of publication of application: **28.03.2012**
(21) Application number: 11182947.9
(22) Date of filing: 27.09.2011
(51) Int. Cl.: G06Q 10/00

(54) **Automatically and adaptively configurable system and method**

(30) Priority: 28.09.2010 US 387230 P; 01.02.2011 US 18982
(71) Applicant: Honeywell International, Inc., Morristown, New Jersey 07962-2245 (US)
(72) Inventor: Hamblin, Chris, Morristown NJ 07962-2245 (US); Rogers, William, Morristown NJ 07962-2245 (US); Feyereisen, Thea L., Morristown NJ 07962-2245 (US); Dorneich, Michael Christian, Morristown NJ 07962-2245 (US); Whitlow, Stephen, Morristown NJ 07962-2245 (US); Keinrath, Claudia, Morristown NJ 07962-2245 (US)
(74) Representative: Buckley, Guy Julian

(57) **Abstract**

Methods and apparatus are provided for automatically and adaptively configuring a system for a user. User data that includes information representative of temporal and contextual user preferences, behaviors, habits, biases, idiosyncrasies, and tendencies associated with system settings and configurations are loaded into the system. The system is then configured based on the user data. User-initiated operations of the system are continuously monitored to model user performance. The user data are continuously updated based on the modeled user performance, and the system is continuously and automatically reconfigured based on the updated user data.

## Description

### PRIORITY CLAIM

This application claims the benefit of U.S. Provisional Application No. 61/387,230, filed September 28, 2010.

### TECHNICAL FIELD

The present invention generally relates to automation and information systems, and more particularly relates to automatically and adaptively configuring an automation and information system for individual users.

### BACKGROUND

Users of automated systems often complain of a lack of mode awareness or of so-called "automation surprises" that can occur when the systems perform differently than expected. Adaptive automation seeks to improve human-machine interaction with a system by adapting the automation based on the immediate needs and historical preferences of the user. One of the challenges associated with adaptive systems is getting these systems to adapt in a manner that is both intuitive and predictable for the user. Unfortunately, users come with a vast array of experiences, biases, and cultural differences that influence the individual user's expectations and preferences. Thus, what may be intuitive to one person may seem completely illogical to another. Likewise, different experiences produce varying levels of expertise and skill levels. As a result, usability, workload, and user satisfaction can vary dramatically among users.

Hence, what is needed is an adaptive system and method that adapts in a manner that is intuitive and predictable for the user and/or adapts to individual users. The present invention addresses at least these needs.

### BRIEF SUMMARY

In one embodiment, a method for automatically and adaptively configuring a system for a user includes loading user data into the system. The user data includes information representative of temporal and contextual user preferences, behaviors, habits, biases, idiosyncrasies, and tendencies associated with system settings and configurations. The system is configured based on the user data. User-initiated operations of the system are continuously monitored to model user performance. The user data are continuously updated based on the modeled user performance, and the system is continuously and automatically reconfigured based on the updated user data.

In another embodiment, an automatically adaptable system includes memory and a processor. The memory has user data stored therein that includes information representative of temporal and contextual user preferences, behaviors, habits, biases, idiosyncrasies, and tendencies associated with system settings and configurations. The processor is in operable communication with the memory and is configured to selectively retrieve the user data from the memory and, upon retrieval of the user data, to configure the system based on the user data, continuously monitor user-initiated operations of the system to model user performance, continuously update the user data based on the modeled user performance, and continuously and automatically reconfigure the system based on the updated user data.

In yet another embodiment, an automatically adaptable aircraft avionics system includes memory and a processor. The memory has pilot data stored therein that includes information representative of temporal and contextual user preferences, behaviors, habits, biases, idiosyncrasies, and tendencies associated with the aircraft avionics system settings and configurations. The processor is in operable communication with the memory and is configured to selectively retrieve the pilot data from the memory and, upon retrieval of the pilot data, to configure the aircraft avionics system based on the pilot data, continuously monitor pilot-initiated operations of the aircraft avionics system to model pilot performance, continuously update the pilot data based on the modeled pilot performance and store the updated pilot data in the memory, and continuously and automatically reconfigure the aircraft avionics system based on the updated pilot data.

Furthermore, other desirable features and characteristics of the automatically adapting system and method will become apparent from the subsequent detailed description, taken in conjunction with the accompanying drawings and this background.

### BRIEF DESCRIPTION OF THE DRAWINGS

The present invention will hereinafter be described in conjunction with the following drawing figures, wherein like numerals denote like elements, and wherein:

FIG. 1 depicts a functional block diagram of an example of an adaptive aircraft avionics system; and

FIG. 2 depicts a process, in flowchart form, that may be implemented in the adaptive aircraft avionics system of FIG. 1.

### DETAILED DESCRIPTION

The following detailed description is merely exemplary in nature and is not intended to limit the invention or the application and uses of the invention. In this regard, although the following detailed description relates to an aircraft avionics system and method implemented therein, it will be appreciated that the methodology may be implemented in numerous other automation and information systems. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

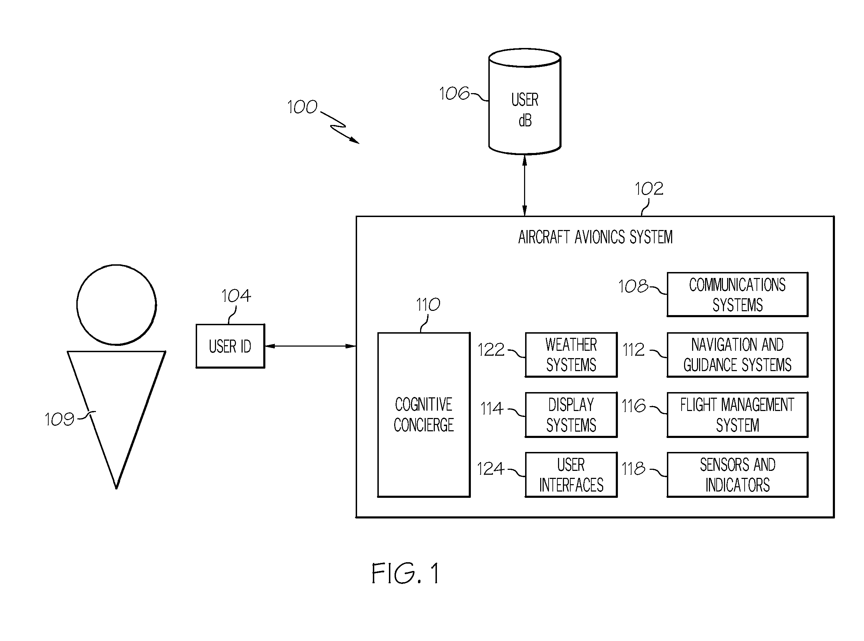

Turning now to FIG. 1, a functional block diagram of an adaptive aircraft system 100 is depicted. The adaptive aircraft system 100 includes at least the aircraft avionics system 102. In some embodiments, the adaptive aircraft system 100 may also include user identification media 104 and/or a user database 106. The aircraft avionics system 102, as is generally known, includes at least communication systems 108, navigation and guidance systems 112, display systems 114, flight management systems 116, sensors and indicators 118, weather systems 122, and various user interfaces 124 to assist a user (e.g., a pilot) 109 in implementing control, monitoring, communication, and navigation functions of the aircraft in which the aircraft avionics system 102 is installed.

The aircraft avionics system 102 additionally implements a function that is referred to herein as a "cognitive concierge" 110. In the depicted embodiment, it is noted that the cognitive concierge 110 is depicted as a functional block that is separate and distinct from various other functional blocks that comprise the aircraft avionics system 102. It will be appreciated that this is done merely for ease of illustration, and that the functionality of the cognitive concierge 110 may be implemented in one or more of the functional blocks depicted in FIG. 1.

The cognitive concierge 110 provides a functionality that allows the adaptive avionics system to recognize individual users (e.g., pilots 109), and apply individual user preferences and settings. The cognitive concierge 110 additionally takes into account individual user training, experience, the recentness of their experience, as well as any biases, habits, and idiosyncrasies, and adapts the aircraft avionics system 102 accordingly. For example, if the pilot 109 is relatively inexperienced and unfamiliar with a specific airport, the cognitive concierge 110 would adapt appropriate portions of the aircraft avionics system 102 to provide additional assistance and information during terminal and ground operations. Similarly, if the pilot 109 is highly experienced, but is unfamiliar with a particular approach procedure, or has not flown the particular approach procedure for a significant time period, the cognitive concierge 110 will anticipate low workload for fundamental flying tasks, but will adapt appropriate portions of the aircraft avionics system 102 to compensate for the pilot's 109 lack of recent experience with the particular approach procedure.

The cognitive concierge 110, in at least some embodiments, is additionally configured to develop custom training programs for individual pilots 109 based on their experience and performance. When implemented in multi-pilot aircraft, the cognitive concierge 110 may be configured to identify the strengths and weaknesses of the individual pilots 109. The cognitive concierge 110, based on the individual strengths and weaknesses, may then adapt appropriate portions of the aircraft avionics system 102 to enhance crew strengths, while identifying embedded training automation or other training programs to improve the identified weaknesses. The identified training would preferably be offered at appropriate times in the flight, based on workload and contextual factors.

The adaptive aircraft system 100 is configured to selectively upload pilot preferences, as well as training, operational, and behavioral history. The adaptive aircraft system 100 is thus configured to recognize individual pilots 109 regardless of the aircraft he or she is flying. To do so, the adaptive aircraft system 100 is configured to receive a unique identifier associated with each pilot 109. The unique identifier may be a unique user identification (ID) that the pilot 109 is required to remember and enter into the adaptive aircraft system 100 via, for example, one of the user interfaces 124. Alternatively, the unique user ID may be stored on a user identification media 104. In this latter instance, the user identification media 104 may be variously implemented and may include, for example, a smart chip that is embedded on or in an ID card, a USB device, or any one of numerous other portable memory storage devices. The unique identifier may also be implemented biometrically, and be associated with any one of numerous unique physiological characteristics of the pilot 109 including, but not limited to, fingerprints, face recognition, DNA, palm prints, hand geometry, and iris or retina recognition.

No matter how the unique identifier is implemented, the pilot 109 will log in to the aircraft avionics system 102, either automatically or manually, via his or her unique identifier. Upon receipt of the unique identifier, the aircraft avionics system 102, via the cognitive concierge 110, automatically uploads the pilot data, which is uniquely associated with the pilot 109, into the aircraft avionics system 102. The pilot data may be stored on the user identification media 104, in the user database 106, or both. It will be appreciated that the user database 106, if included, may be centrally disposed remote from the aircraft, or a user database 106 may be installed in each aircraft having the aircraft avionics aircraft 102 that includes the cognitive concierge 110. Depending on how and where the pilot data are stored, the pilot data may be uploaded to the aircraft avionics system 102 via a wired connection or a wireless connection.

The pilot data that the cognitive concierge 110 stores and retrieves includes various pilot preferences, behaviors, habits, and tendencies associated with avionics settings and configurations. The settings and configurations may include, but are not limited to, display management, automation preferences, and avionics settings. Pilot preferences may also include temporal and contextual elements regarding when to make changes to the settings and configurations. The pilot data may also include training and operational history. Such data may include, but are not limited to, hours flown, aircraft flown, recentness of experience, airports, approaches, runways, and facilities used, and training completed and recentness of the training.

Upon receipt of the pilot data, the cognitive concierge 110 will configure the aircraft avionics system 102 to be adapted to the pilot 109. For example, the cognitive concierge 110 will customize the formats of the displays and navigation menus to match pilot preferences, frequency of use, and habits. Certain display formats may also be customized so that some displays may provide more information while other displays may be de-cluttered.

The cognitive concierge 110 is also configured to determine the pilot's recent operational experience at both the current and destination airports and, based on this determination, to selectively configure the aircraft avionics system 102. For example, if the pilot 109 frequently flies into and out of the destination and current airports, respectively, the cognitive concierge 110 may configure the aircraft avionics system 102 to display fewer details about these airport environments and automatically tune the communication systems 108 to radio and navigation frequencies commonly used by the pilot 109. Conversely, if the pilot 109 has little or no experience at the current or destination airports, the cognitive concierge 110 may configure the aircraft avionics system 102 to provide more details about the airport environment (or environments). Preferably, the cognitive concierge 110 is further configured to makes similar determinations and adaptations during the entire flight including departures, arrivals, and approaches.

In addition to adapting the aircraft avionics system 102 to pilot preferences and operational experience, the cognitive concierge 110 is also preferably configured to adapt the aircraft avionics system 102 to pilot habits and tendencies. For example, the cognitive concierge 110, based on the uploaded pilot data, might determine that a pilot 109 prefers to calculate top-of-descent (TOD) approximately 50 miles from the destination airport. In such a case, the aircraft avionics system 102 would be configured to automatically generate a prompt to the pilot 109 to calculate TOD. The cognitive concierge 110, based on the uploaded pilot data, may determine that a pilot 109 typically forgets to perform a specific task. In such a case, the aircraft avionics system 102 would be configured to automatically generate a prompt to the pilot 109 to perform the task at the appropriate time.

The cognitive concierge 110 is also preferably configured, based on the pilot data, to track pilot performance (both improvement and deterioration). If the cognitive concierge 110, based on the pilot data, determines that certain pilot skills may be degrading or have been not exercised for a period of time, the aircraft avionics system 102 could be configured to generate training recommendations. Such recommendations may include recurrent training, such as reviewing various procedures or operations, encouraging the pilot to practice a maneuver, such as manually flying a certain approach, or viewing an embedded training application.

The cognitive concierge 110 is continuously running in the background of the aircraft avionics system 102, and actively monitors pilot-initiated operations of the aircraft avionics system 102 to model pilot performance. Thus, the temporal and contextual pilot preferences, behaviors, habits, and tendencies associated with avionics settings and configurations are learned by the cognitive concierge 110. This allows the pilot data to be continuously updated, rather than simply loaded into the aircraft avionics system 102 upon log-in, and for the configuration of the aircraft avionics system 102 to be continuously updated.

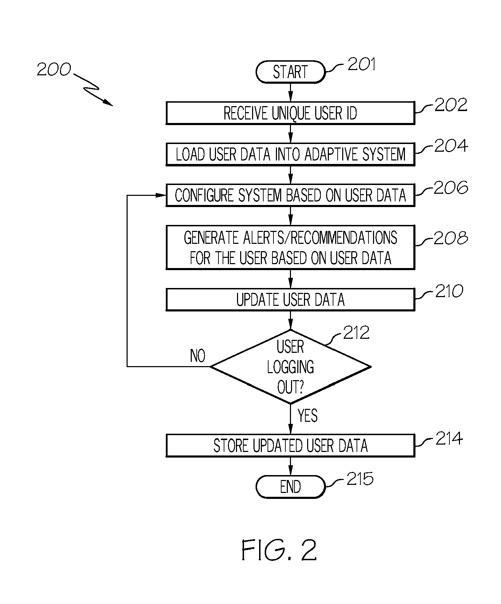

The general methodology of the cognitive concierge 110 that is implemented in the aircraft avionics system 102, and that was described above, is depicted in flowchart form in FIG. 2. For completeness, a description of this method 200 will now be provided. In doing so, it is noted that the parenthetical references refer to like-numbered flowchart blocks.

The method begins upon receipt of a unique user ID (202). As noted above, the unique user ID may be received via a wired or wireless connection, and may be manually entered by the pilot 109, stored on a storage medium, or be implemented biometrically. Upon authenticating the user, via the unique user ID, the cognitive concierge 110 loads the user data associated with the user ID (204). The user data may be retrieved, also via a wired or wireless connection, from the user identification media 104 or the user database 106. The cognitive concierge 110 then configures the aircraft avionics system 102 based on the retrieved user data (206).

As noted above, the cognitive concierge 110 is continuously running in the background of the aircraft avionics system 102, and actively monitors pilot-initiated operations of the aircraft avionics system 102 to model pilot performance. This allows the cognitive concierge to selectively generate alerts and/or recommendations for the user (208), and to continuously update the user data (210). The alerts may relate to particular operations that the user may or should initiate at a particular time. For example, if the user data indicates that the user has a tendency to perform a particular task at a particular time, the cognitive concierge may generate an alert to remind the user to perform the particular task. The recommendations may relate to particular training exercises. The alerts and/or recommendations may be generated audibly, rendered visually on one or more of the display systems 114, or both.

Until the user logs out, the continuously updated user data are used to continuously reconfigure the aircraft avionics system 102 (206-210). If the cognitive concierge 110 determines that the user is logging out of the aircraft avionics system 102 (212), the updated user data are stored on the user identification media 104, the user database 106, or both (214).

The system described herein implements a method that allows the system to adapt to individual users in a manner that is intuitive and predictable for the users. Moreover, although the functionality is described herein as being implemented in an aircraft avionics system, it will be appreciated that it may be implemented in numerous other automation and information systems.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be one or more conventional processors, controllers, microcontrollers, state machines, or combinations thereof. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth herein.

## Claims

1. A method for automatically and adaptively configuring a system for a user, comprising the steps of:
loading user data into the system, the user data including information representative of temporal and contextual user preferences, behaviors, habits, biases, idiosyncrasies, and tendencies associated with system settings and configurations;
configuring the system based on the user data;
continuously monitoring user-initiated operations of the system to model user performance;
continuously updating the user data based on the modeled user performance; and
continuously and automatically reconfiguring the system based on the updated user data.

2. The method of Claim 1, further comprising:
receiving a unique identifier associated with the user; and
selectively authenticating the user based on the unique identifier.

3. The method of Claim 2, wherein the step of loading the user data is performed in response to the user being authenticated.

4. The method of Claim 1, further comprising selectively generating an alert for the user based on the user data.

5. The method of Claim 1, further comprising selectively generating a recommendation for the user based on the user data.

6. The method of Claim 5, wherein the recommendation includes a training recommendation.

7. The method of Claim 5, further comprising:
determining user workload from the modeled user performance; and
generating the recommendation when the user workload is less than a predetermined threshold workload.

8. The method of Claim 1, further comprising:
tracking user operational experience; and
continuously updating the user data to include the user experience.

9. The method of Claim 1, further comprising selectively storing the updated user data on a memory storage device.

10. An automatically adaptable system, comprising:
memory having user data stored therein, the user data including information representative of temporal and contextual user preferences, behaviors, habits, biases, idiosyncrasies, and tendencies associated with system settings and configurations; and
a processor in operable communication with the memory, the processor configured to selectively retrieve the user data from the memory and, upon retrieval of the user data, to:
(i) configure the system based on the user data,
(ii) continuously monitor user-initiated operations of the system to model user performance,
(iii) continuously update the user data based on the modeled user performance, and
(iv) continuously and automatically reconfigure the system based on the updated user data.
